# EUROPEAN PATENT SPECIFICATION

(11) **EP 2 297 468 B1**
(45) Date of publication and mention of the grant of the patent: **04.06.2014**
(21) Application number: 09777458.2
(22) Date of filing: 27.07.2009
(51) Int. Cl.: F15B 3/00

(54) **APPARATUS FOR HYDRAULICALLY ACTUATING PROCESSING MACHINES SUCH AS METAL FORMING MACHINES AND METHOD FOR ACTUATING SUCH METAL FORMING MACHINES**
VORRICHTUNG ZUR HYDRAULISCHEN BETÄTIGUNG VON ARBEITSMASCHINEN WIE ETWA METALLFORMMASCHINEN UND VERFAHREN ZUR BETÄTIGUNG DERARTIGER METALLFORMMASCHINEN
APPAREIL D'ACTIONNEMENT HYDRAULIQUE DE MACHINES DE MÉTALLURGIE TELLES QUE DES PRESSES POUR LE FORMAGE DE MÉTAUX, ET PROCÉDÉ D'ACTIONNEMENT DE TELLES MACHINES

(43) Date of publication of application: 23.03.2011
(73) Proprietor: Oilgear Towler S.A.S., 77183 Croissy Beaubourg (FR)
(72) Inventor: JAMET, Frédéric, F-94170 Le Perreux sur Marne (FR)
(74) Representative: Beyer, Rudi
(86) International application number: PCT/EP2009/005424
(87) International publication number: WO 2010/124708

(56) References cited:
- EP-A1- 0 654 330
- DE-A1- 1 502 282
- DE-A1- 2 223 709
- DE-C2- 4 345 339
- JP-A- 2002 130 201

## Description

The invention relates to an apparatus for actuating metal forming machines such as forging machines, forging presses or extrusion machines.

Metal working machines like forging presses, forging hammers, extrusion presses, steel working machines, milling machines are well-known. DE 33 26 690 C2 describes an apparatus for actuating a hydraulic forging press with several variable flow generators of pressure. Those generators receive hydraulic fluid by a boost pump from a source via a check valve.

DE 1 502 282 describes a forging press with a hydraulic actuator and accumulators.

Also the forging press according to DE 2 223 709 works with accumulators via distribution valves.

Summarizing, some of the hydraulic machines work with High Water Based Fluids (HWBF) or even pure water. Those fluids are very aggressive and cannot be pumped by any type of pumps. The most common solution to handle those fluids is to use fixed delivery reciprocating pumps, e.g. triplex or quintuplex pumps, delivering into hydraulic accumulators which then restitute their energy to the system through proportional valves. The fact that this type of pump delivers a fixed flow prevents its use to drive directly the hydraulic cylinders of the machines which need different speeds according to the sequences of their cycles (approach phase, working phase, return phase).

The main disadvantages of those hydraulic machines with motors driven fixed delivery pumps, hydraulic accumulators, proportional valves and hydraulic cylinders are the following:
- the use of reciprocating pumps
- the use of hydraulic accumulators which require safety components to secure the system
- the accumulators need to be certified regularly by competent authorities
- the tremendous energy stored in the accumulators has to be controlled by proportional valves which generate heat, waste power and wear the components by erosion.

The principles of the fixed delivery reciprocating pumps are:
An electric motor shaft goes into a gearbox to reduce its rotational speed. The outlet shaft of the reduction box drives a cam shaft to transform the rotational movement into a linear movement transmitted to a certain number of cylinders (3 or 5 usually). The bodies of the cylinders hold an inlet check valve and an outlet check valve. During one complete turn of the cam shaft, the piston of the cylinder makes a backward movement admitting the pumped fluid into the cylinder from the inlet check valve and then a forward movement to deliver the fluid through the outlet check valve.

The main disadvantages of these reciprocating pumps are:
- only a fixed flow delivered
- flow / pressure pulsations on the delivery port / pressure pipe or channel
- the alternate loads on camshafts drive to fatigue failures
- important maintenance costs
- unnecessary power consumption due to mechanical frictions.

EP 0 654 330 A1 describes a superhigh pressure control system, comprising a first booster and a second booster which are operative through reciprocating motions of oil hydraulic cylinders to pressurize water sucked into water-pressurizing plunger chambers and discharge pressurized water to a water discharge line; first directional control means and second directional control means which are respectively disposed between respective oil hydraulic cylinders of the first and second boosters and oil hydraulic sources so as to enable reciprocation of the oil hydraulic cylinders, the first and second directional control means having three switching positions, which are pressing, prepressing and suction positions; a first forward stroke sensor for detecting a position adjacent to the end of each pressing stroke and a first return stroke sensor for detecting a position adjacent to the end of each suction stroke which are disposed in the first booster; a second forward stroke sensor for detecting a position adjacent to the end of each pressing stroke and a second return stroke sensor for detecting a position adjacent to the end of each suction stroke which are disposed in the second booster; and control means which is operative during each pressing stroke of the first booster, to switch the second directional control means from the suction position to the prepressing position in response to a detection signal from the second return stroke sensor, and then to switch the first directional control means from the pressing position to the suction position and the second directional control means from the prepressing position to the pressing position in response to a detection signal from the first forward stroke sensor, and which is operative, during each pressing stroke of the second booster, to switch the first directional control means from the suction position to the prepressing position in response to a detection signal from the first return stroke sensor, and then to switch the second directional control means from the pressing position to the suction position and the first directional control means from the prepressing position to the pressing position in response to a detection signal from the second forward stroke sensor. The pressure control system as described before contains a first restriction and a second restriction respectively in oil-supply side passages at switching positions for prepressing for the first directional control means and second directional control means. The hydraulic oil discharged during the pressing stroke of each of the hydraulic cylinders of the first and second boosters is discharged into a tank via a common return line, the common return line being provided with a check valve for setting back pressure. The hydraulic sources consist of a first oil hydraulic pump provided for the first booster and a second oil hydraulic pump provided for the second booster. There is also a first booster and a second booster which are operative through reciprocating motions of oil hydraulic cylinders to pressurize water sucked into water-pressurizing plunger chambers and discharge pressurized water to a water discharge line; first directional control means and second directional control means which are respectively disposed between respective oil hydraulic cylinders of the first and second boosters and oil hydraulic pumps actuated by a motor so as to enable reciprocations of the oil hydraulic cylinders, the first and second directional control means having three switching positions, which are pressing, prepressing and suction positions; and control means for positioning both the first and second directional control means at switching positions for suction for a predetermined time when the motor is actuated.

The purpose of this superhigh pressure control system is to generate a water jet used to cut materials (steel, rocks or the like). This system does not need an accurate control flow because it does not drive a machine. It will create a small flow, but at a very high pressure while the transfer barrier generates a big flow at a lower pressure.

DE 43 45 339 C2 describes a system which brings an amount of water in the piece and to pressurize it once in order to deform the material and shape it as requested. It is a "one shot" pressurization, it cannot supply a continuous flow at a given pressure to move a machine. As soon as you have reached the right end of the stroke of the piece you have to decompress everything bring the piece to its left end and then you can make another piece. There is only one cylinders and not alternative motion like in the transfer barrier to ensure a continuous supply of fluid.

DE 15 02 282 is a certain type of forming machine, that is to say a screw press. The power is generated hydraulically.

DE 22 23 709 A1 is a coiling or winding machine.

JP 2002 130 201 A discloses an apparatus for actuating processing machines according to the preamble of claim 1.

The object of the invention is to overcome the above described disadvantages of the prior art.

One object of the invention is to offer an apparatus for actuating of metal forming machines, such as forging machines, forging presses or extrusion machines.

The solution is described in independent claim 1.

An apparatus for actuating of processing machines like metal forming machines as described above contains at least one variable delivery pump or more than one variable delivery pump, which pump via at least one distribution valve or several distribution valves the fluid, for example mineral oil, directly into the cylinder rooms of hydrostatic generators or hydrostatic actuators (rams).

The pressure of the fluid delivered by the variable pumps can be up to 500 bar, preferably up to 350 bar. The sealed pistons of the generators or actuators are each connected via separate piston rods to another piston which is movable in a separate or the same cylinder, also in a sealed manner. Separate cylinder rooms receive via different pipes or channels from a fluid or water boost supply separately a specific amount of fluid or liquid which is being compressed by the movable pistons working in opposite arranged cylinders. The circuit for this fluid or liquids like water is completely separated from a supply circuit which delivers a fluid, for example hydraulic oil, to the opposite arranged cylinder rooms of the rams. One of the pair of pistons or rams goes up, the other pair of pistons goes down and vice versa. Both generators or actuators or rams deliver fluid, especially water based fluids or pure water, into a pipe or channel system, which is connected to the metal forming machine, like a forging press or the like. The frequency or pulsation in the pressure line is very small and smooth, almost equal. There could be also more than two, for example four or even more generators or actuators or rams which work altogether and deliver liquids or fluid under high pressure to the pipe or channel to the system which leads to the metal forming machine.

The main advantages of such an apparatus or machineries are:
- the use of variable pumps
- simplification of the circuit by using logic valves (opened or closed, no proportionality)
- a lower power consumption because the rams deliver only when it is needed and has a better efficiency

Claim 1 describes an apparatus for actuating of processing machines with one or multiple motor-driven pumps that are variable with regard to their flow rate which actuates at least two alternately driven actuators. The fluid which is delivered by the variable motor-driven pumps is different from the fluid which is compressed by the actuators, for example pure water or high water based fluid.

The motor-driven pumps may be all variable with regard to their flow rate with at least two separate e.g. hydraulic pressure generators or e.g. hydraulic actuators. Important is that the pipe or channel system of the pressure pipe or channel which leads to the apparatus for actuating metal forming machines such as forging machines, forging presses or extrusion machines is completely separated from the pipe or channel system which is connected to the motor-driven pump or pumps. Whereby the fluid which is delivered by the variable motor-driven pumps is different from the fluid which is compressed by the generators or actuators, for example, pure water or high water based fluid.

The foregoing and other objects and advantages of the invention will appear in the detailed description which follows. In the description, reference is made to the accompanying drawings which illustrate a preferred embodiment of the invention as examples. Many modifications and variations will be apparent to those skilled in the art. Therefore, the invention should not be limited to the embodiment described, but should be defined by the claims.

One embodiment of the invention is described, by way of example, with reference to the accompanying drawings, in which:
- Fig. 1: is a schematic plan view according to the invention;
- Fig. 2a - 2g: show step by step the movements of the cylinders during a cycle of the apparatus to bring a complete understanding of the principle:

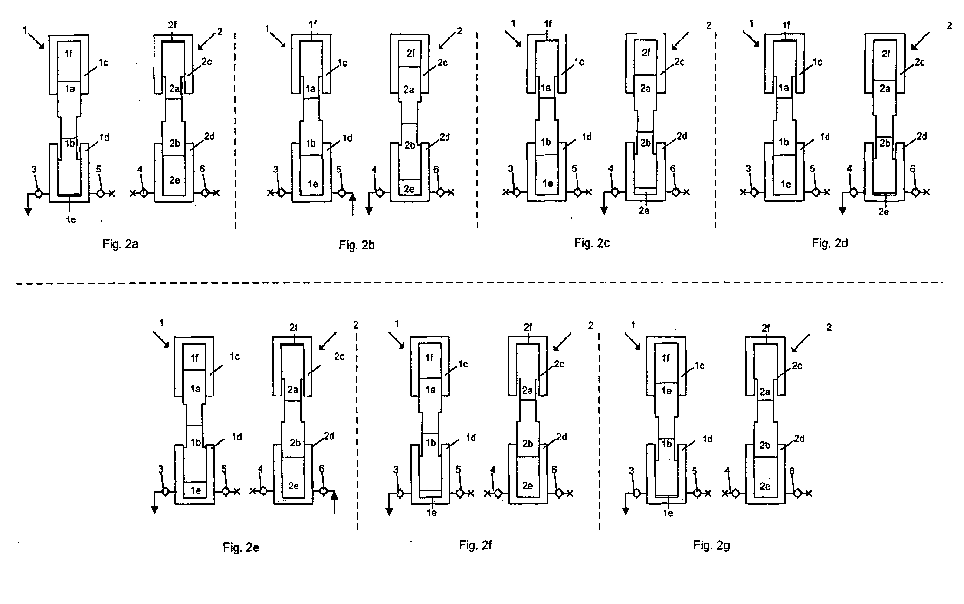

- Fig. 2a: Step 1 - Beginning of the cycle; generator is delivering pressurized fluid to the system through outlet check valve; inlet check valve is closed; generator is precompressed; the pressures are enclosed in the cylinders; piston is ready to deliver fluid to the system; check valves are closed;
- Fig. 2b: Step 2 - Generator has been filled with the fluid through inlet check valve still opened; check valve is closed; generator is delivering pressurized fluid to the system through outlet check valve; inlet check valve is closed;
- Fig. 2c: Step 3 - Generator is ready for precompression; check valves are closed; generator is still delivering pressurized fluid to the system through outlet check valve; inlet check valve is closed;
- Fig. 2d: Step 4 - Generator is precompressed; the pressures are enclosed in the cylinders; piston is ready to deliver fluid to the system; check valves are closed; generator is delivering pressurized fluid to the system through outlet check valve; inlet check valve is closed;
- Fig. 2e: Step 5 - Generator is delivering pressurized fluid to the system through outlet check valve; inlet check valve is closed; generator has been filled with the fluid through inlet check valve still opened; check valve is closed;
- Fig.2f: Step 6 - Generator is still delivering pressurized fluid to the system through outlet check valve; inlet check valve is closed; generator is ready for precompression; check valves are closed;
- Fig. 2g: Step 7 - End of the cycle - Generator is delivering pressurized fluid to the system through outlet check valve; inlet check valve is closed; generator is precompressed; the pressures are enclosed in the cylinders; piston is ready to deliver fluid to the system; check valves are closed; the position is identical to the position of Fig. 2a;

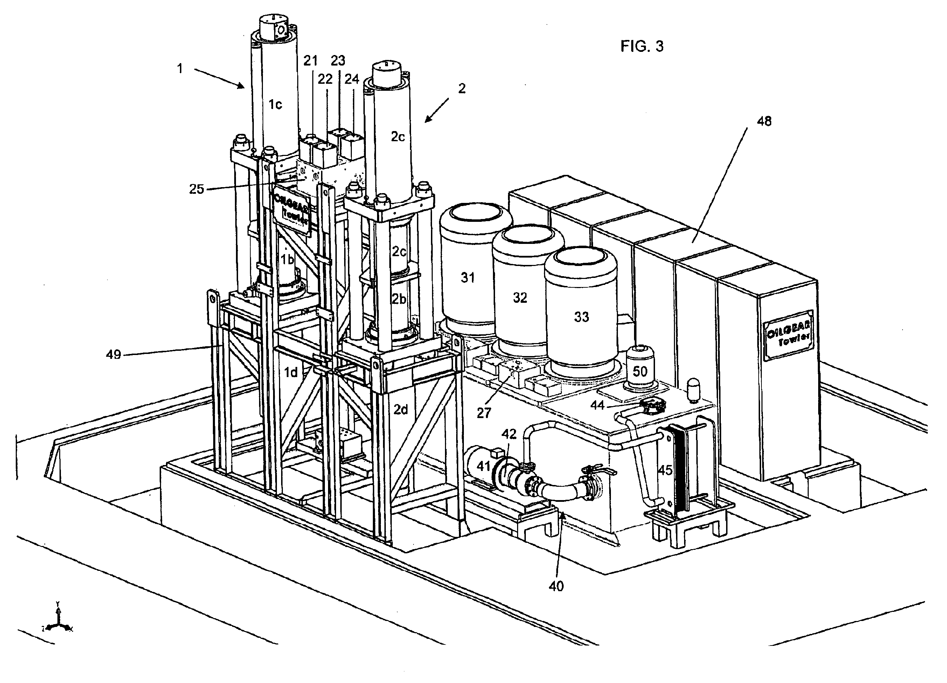

- Fig. 3: shows an apparatus for actuating processing machines, such as extrusion presses, forging presses, forging hammers, steel working machines, milling machines or the like, in three-dimensional view;

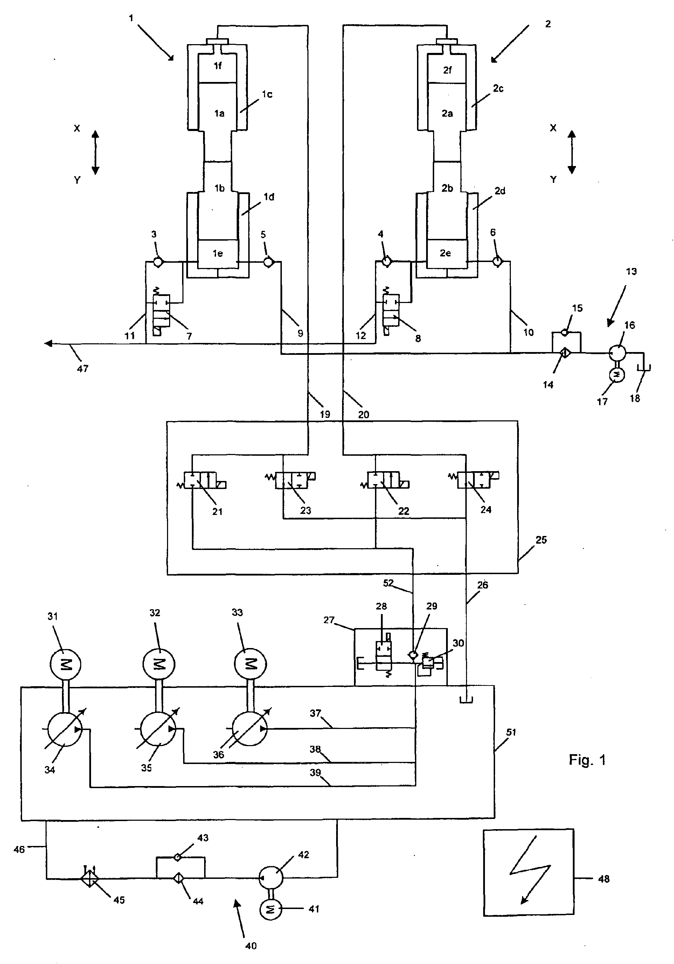

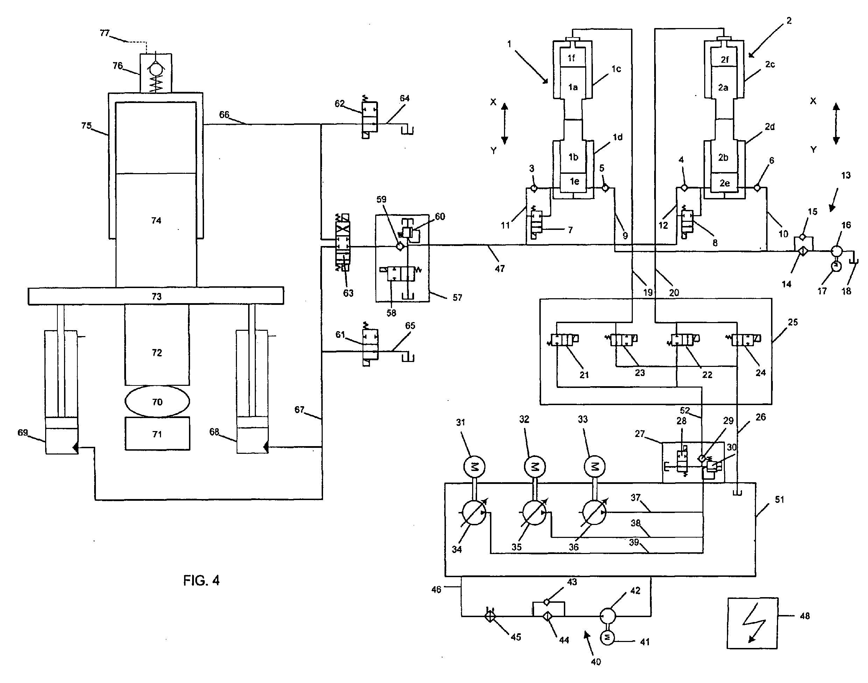

- Fig. 4: shows a schematic diagram according to Fig. 1 in connection with a forging press.

In Fig. 1 and 2 hydrostatic pressure generators or hydrostatic actuators (rams) are marked with the references 1 and 2, each of which consist of two pistons 1 a, 1 b or 2a, 2b co-axially arranged to each other.

The pistons 1 a, 1b or 2a, 2b are axially movable in the directions X or Y in a sealed manner in cylinders 1c, 1d or 2c, 2d. The cylinders 1c, 1d or 2c, 2d may also be connected with each other to build one cylinder part, each of which contains the cylinders 1c, 1d or 2c, 2d.

The pistons 1 a, 1 b and 2a, 2b and their cylinders 1 c, 1 d and 2c, 2d have the same size and same diameter in the shown embodiment. But it should be clear that the pressure active surfaces of the pistons 1 a, 1b and 2a, 2b may be identical or different in size.

It is also clear for one skilled in the art that the pressure active surfaces of the pistons 1b, 2b may be greater or smaller than the pressure active surfaces of the pistons 1 a, 2a to get higher or lower pressures, respectively, at the pressure side of the rams 1 and 2.

It should be also clear that because of simplicity, in the drawings are shown two hydraulic generators or actuators 1, 2 (rams), but there could be also one or more than two, for example four or six or even a greater number of generators or actuators 1, 2 (rams) than shown in the drawings.

The pressure generators 1, 2 may be arranged vertically with their longitudinal axes. In the drawings these axes in which the pistons 1a, 1b and 2a, 2b can move in the direction X or Y are parallel, but there are also solutions possible, in which the cylinders may be arranged in a different position, for example horizontally or inclined to each other should this be necessary.

It is also clear for one skilled in the art that the pressure generators 1, 2 must not be close together. One or more than one generator may be arranged from the other generators in a distance, for example in a different room without changing the function which will be described in more details now.

Above piston 1a and below piston 1b are cylinder rooms 1f and 1e and above piston 2a and below piston 2b are cylinder rooms 2f and 2e.

Cylinder rooms 1f and 2f are each connected to a pipe or channel 19 and 20 which are connected to a control manifold 25 with two admission or distribution valves (21, 22) and two exhaust valves 23, 24 each actuated by a solenoid which is controlled by the automation cubicle 48. These valves 21, 22, 23 and 24 may be connected to lading manifold 27. Pipe 52 leads to a pumping station with three pumps 34, 35 and 36 which are variable with regard to their flow rate. Each pump 34, 35, 36 is motor-driven by a suitable motor, for example an electrical motor 31, 32 and 33. Each pump 34, 35, 36 may be controllable in regard of their flow rate by the automation cubicle 48. The pumps 34, 35 and 36 may be controlled in view of their flow rate separately or all together at the same time. There could be also more than three or less than three pumps, for example four pumps, all variable to their flow rates, if necessary. Preferably all pumps 34, 35 and 36 are equally build and may produce the same flow rate during a specific time limit if they got the same control input.

The pumping station is equipped with a filtration and cooling loop 40 for the fluid which is pumped by the pump 42 and delivered through the pipe 46. This fluid can be preferably a hydraulic liquid like hydraulic oil or emulsion. The filtration and cooling loop 40 contains a motor 41, a pump 42, a filter element 44 with a bypass check valve 43, and a cooling station 45. The reservoir 51 of the pumping station may contain a suitable amount of fluid, e.g. hydraulic oil.

The pressure lines or pressure pipes 37, 38, 39 of the three pumps 34, 35, 36 are interconnected to the loading manifold 27. Whereas in Fig. 1 all three pumps 34, 35, 36 are connected via branch pipes or channels 37, 38 and 39 to the single loading manifold 27 it is also possible to connect the pressure pipes or channels of each three pumps 34, 35 and 36 to separated loading manifold like manifold 27.

The loading manifold 27 has an electrically controlled valve 28, a check valve 29 and a pressure limiter 30. Pipe 26 leads to the suitable container or reservoir 51 to store backflow fluid from the hydrostatic generators or actuators 1 and 2.

Reference 13 is a filtered water boost supply with a filter 14 with bypass check valve 15, motor 17, which drives the pump 16 and a hydraulic fluid source 18.

Cylinder room 1e is connected via a pipe or channel 11 and an outlet check valve 3 to a pressure line or channel 47 which leads to the processing machine, for example a forging press, which has to be driven by the hydraulic generators or actuators 1 and 2. Reference 7 shows a precompression valve with a solenoid which allows to bypass the check valve 3 when operated in order to precompress the cylinder room 1e.

Cylinder room 2e is connected to a pipe or channel 12 via a check valve 4 also to pressure line 47. Reference 8 shows a precompression valve with a solenoid which allows to bypass the check valve 4 when operated in order to precompress the cylinder room 2e.

Both cylinder rooms 1e and 2e are connected via inlet check valves 5 and 6 to a pipe or channel 9 or 10, respectively, which is connected to the filtered water boost supply 13.

In the embodiment shown in the drawings the pipework or channel work system build by pressure line 47, pipes 11, 12, 9, 10 and the water boost supply 13 is separated from the pipe system or channel which is mainly build by pipes 19, 20, 26,52.

The filtered water boost supply 13 delivers in the shown example pure water to cylinder rooms 1e and 2e alternately, whereas the pumps 34, 35 and 36 deliver a hydraulic fluid, like hydraulic oil or emulsion via admission and exhaust valves 21, 22, 23, 24 alternately to the cylinder rooms 1f and 2f of the hydrostatic pressure generators or actuators 1 and 2.

Therefore, both fluids which fill the cylinder rooms 1f and 2f and 1e and 2e can be completely different. Whereas in the cylinder rooms 1e and 2e can be pure water, the fluid which is pressed into the cylinder rooms 1f and 2f can be hydraulic oil or emulsion. The fluid, e.g. water, which fills the cylinder rooms 1e and 2e under pressure moves the pistons 1 a, 1 b or 2a, 2b in the direction X alternately, whereas the fluid, e.g. hydraulic liquid, which is delivered through pipes 19 and 20 into the cylinder rooms 1f and 2f drives the pistons 1a, 1b or 2a, 2b into the direction Y and actuates a processing machine, like a forging press by fluid under high pressure through pressure pipe or channel 47.

The fluid like water which is pumped by the filtered water boost supply 13 into pipes 9 and 10, respectively, could be under pressures from 1 to 15 bars, preferably 4 bar, whereas the pressures delivered by the pumps 34, 35, 36 through pipes 26, 52 could be up to 500 bar, preferably up to 350 bar.

The pressures of the fluids or liquids in pipe 47 could be up to 1400 bars, depending on the processing machine which has to be driven by the apparatus according the invention.

In Fig. 3 the items are marked with the same references as used in Fig. 1. Reference 48 are a power supply and automation control cabinets which controls the motors 31, 32, 33 and the pumps 34, 35, 36 and all valves like 21, 22, 23, 24, 7, 8 and 28 and the motor 17 for the pump 16 of the boost supply 13. The two rams or hydrostatic generators 1 and 2 are vertically positioned and their longitudinal axes are parallel to each other. The processing machine which receives the pressurized fluid from the two rams 1 and 2 is not shown.

The piston or ram stroke of pistons 1a, 1b or 2a, 2b, respectively are each of one meter. The full cycle time of each ram stroke is around eight seconds, that is to say four seconds to pump, three seconds to return and 0,5 second to close the inlet check valve 5 or 6, 0,5 seconds to precompress the fluid.

The speed of the pistons 1a, 1b or 2a, 2b during their pumping and returning stroke is almost constant, with the exception for the short acceleration and deceleration periods at the beginning and at the end of the stroke, and has values respectively of about 250 mm/sec and 330 mm/sec. This is ten times less than the average speed of a triplex pump and more than fifteen times less than its maximum speed.

In the shown embodiment in Fig. 3 each pair of pistons 1a, 1b or 2a, 2b moves a distance of 15 meters every minute. This is ten times less than of a triplex pump. The life of the seals and the wear of the contact surfaces are considerably better.

The control of the shown apparatus on return saves 0.5 seconds to allow for the natural closing of the inlet check valve 5 or 6 by its spring. There is no back flow under pressure through the inlet valve 5 or 6 and thus its overall efficiency gains when compared to the triplex pump.

The pistons 1a, 1b or 2a, 2b performs 7.5 cycles per minute in the shown embodiment. Each inlet and outlet check valve 5, 6 or 3, 4 then operates 7.5 times per minute compared with around 300 openings/closings per minute for a triplex pump check valves.

The apparatus shown in Fig. 1 can also operate as a variable pump, pressure or volume control and when flow is not required the rams or generators 1a, 1b are stationary.

The variable pumps 34, 35, 36 have the advantage that the required flows can be given for each function of the processing machine directly to the cylinders 1c, 1d of the pressure generators 1 or 2. In consequence the pressure generators 1 or 2 will deliver the necessary flows to control the speed of the processing machine in each of its phases (approach, working phase, return).

In comparison triplex pumps on water systems, those fixed delivery triplex pumps fill high pressure accumulators. These accumulators give their flow to the hydraulic system through proportional throttling valves to control the speeds of the actuators thus:
- generating heat
- wasting power
- wearing components by erosion
- generating dirt particles

The vertical mounting of the generators or rams 1, 2 allows the on top mounted seals to work in the best conditions: concentricity and dirt particles at the bottom (far from the seals).

The overall efficiency of an apparatus according to the invention is better than on mechanically driven pumps (less power consumption).

An apparatus shown in Fig. 1 and Fig. 3 can be sized easily and then can work at various levels of pressure between (for example) 250 up to 1400 bar, preferably between 250 and 450 bar or 250 and 850 bar, and with various fluids, like pure water (for the rams and generators), hydraulic oil or emulsion, or the like.

An apparatus shown in Fig. 1 and 3 is made of several components, most of them are available on the market and generally with several motor-pump groups. If one group is out of order, the apparatus shown in Fig. 1 and Fig. 3 can still work with lower performance, especially if there are more than two rams or generators 1 and 2, for example four or six of such rams 1 and 2.

The pressure generators 1 and 2 produce a very steady and uniform flow with just minor pulsations in the fluid pressure in the pressure pipe or channel 47. There is almost no pumping effect.

Fig. 2a - 2g show a typical cycle of pistons 1a, 1b, 2a, 2b of the hydrostatic generators or rams 1 and 2.

In Fig. 2a piston 1b is in its lowermost position, whereas piston 2a is in its uppermost position. The cylinder room 2e is in its precompression position in which fluid, for example pure water coming from the pipe 12, is delivered through the precompression valve 8 in cylinder room 2e, whereas piston 2b delivers high pressure by starting its movement in direction Y (down).

Fig. 2b shows the same rams or generators 1 and 2 after three seconds starting their movement in Fig. 2a. Cylinder room 1e is filled with water through check valve 5 which is closing. From cylinder room 2e fluid under high pressure is delivered into the pressure pipe 47 by movement of cylinder 2b in its down position through check valve 4.

Fig. 2c is an intermediate position after 3.5 seconds starting in Fig. 2a. Check valve 5 is closed. From cylinder room 2e fluid under high pressure is delivered into the pressure pipe 47 through check valve 4.

Fig. 2d shows a position after four seconds from the position in Fig. 2a. Piston 2b is in its completely down position and delivers fluid under high pressure through check valve 4 into pipe 47, whereas the cylinder room 1e is in its precompression position in which fluid coming from the pipe 11, is delivered through the precompression valve 7 in cylinder room 1e.

Fig. 2e is the situation after seven seconds starting from position Fig. 2a. From cylinder room 1e fluid under high pressure is delivered via check valve 3 into pressure pipe 47 and piston 2b in cylinder room 2e is moving in direction Y by prefilling with fluid, for example, pure water.

Fig. 2f shows the generators or rams after 7.5 seconds from Fig. 2a. Cylinder 1d delivers fluid, for example pure water, by a check valve 3 into the pressure pipe 47 under high pressure, whereas inlet check valve 6 is closing and piston 2b was moved in direction Y completely.

Fig. 2g is the situation after eight seconds from position 2a. Piston 1b is completely down moved in direction Y and the cylinder room 2e is precompressed by the opening of the valve 8. Piston 2b is ready to press the fluid under high pressure via a check valve 4 into the pipe 47.

The cylinder rooms 1f and 2f during the cycles described in connection with Fig. 2a - 2g are filled with fluid alternately, during the cycles with a different fluid or liquid, for example hydraulic oil via the distribution valves 21, 23, 22, 24 by the action of the variable pumps 34, 35 and 36, controlled by a suitable electronic and/or electrical control system 48.

From the foregoing description it is clear that rams or generators 1 and 2 move at all times in opposite directions to each other. For example, if piston 1 a, 1b is moving in direction Y, at the same time piston 2a, 2b is moving in direction X and vice versa.

High pressure channel 47 leads to a loading manifold 57 via a check valve 59 to a distribution or several ways or distribution valve 63, whereas reference 58 shows a loading valve. Valve 60 and reference 58 is a pressure relief valve.

Decompression and exhaust valve 61 is connected via pipe to a pressure line 67 to return cylinders 68, 69, which act in the shown embodiment with a piston and piston rods on a main beam 73 of a forging press with main cylinder 75, main ram 74 and forging table 71. Reference 70 is a forged ingot and 76 a prefill and exhaust valve with pressure pilot supply 77. The main cylinder 75 is connected to a pressure line 66, which leads via decompression and exhaust valve 62 and decompression and return line either to suitable container or via distribution valve 63 to pipe 47 so that depending on the position of distribution valve 63 hydraulic liquid under pressure in pipe 47 acts via pressure line 66 on the main ram 74 and presses the forging tool 72 against the forged ingot 70. Instead of a forging press, shown in Fig. 4 another suitable apparatus like a forging hammer or an extrusion machine, or steel working machine, or milling machine or other metal forming machine, could be arranged in a suitable way actuated by the rams 1, 2, respectively.

While a single embodiment of the invention has been shown and described, some changes can be made, especially in view of the number of variable pumps and/or hydrostatic generators or hydrostatic actuators (rams). Therefore various changes may be made in the embodiment shown within the scope of the claims.

## Claims

1. Apparatus for actuating processing machines such as presses, forging presses, extrusion presses, forging hammers, extrusion machines, steel working machines or other metal forming machines, by means of fluid pressurizing media, the apparatus having an even number of actuators, preferably first and second actuators (1, 2), further first and second inlet check valves (5, 6), first and second outlet check valves (3, 4), first and second precompression valves (7, 8) and one or multiple motor-driven pumps (34, 35, 36), which are variable with regard to their flow rate and which collectively or independently from each other are designed in a way that their flow rate is infinitely variable or adjustable and which actuates the first and a second alternately driven hydrostatic actuators (1, 2) through one or multiple distribution valves (21, 22, 23, 24) by means of a liquid pressurizing medium such as hydraulic oil or with an emulsion, the first actuator having first upper and lower pistons (1a, 1b) and first upper and lower cylinder rooms (1f, 1e) and the second actuator having second upper and lower pistons (2a, 2b) and second upper and lower cylinder rooms (2f, 2e) wherein a different pressurizing medium, such as water, can be fed through a separated pipe system to the hydrostatic actuators (1, 2) and wherein the different pressurizing medium is pressurized by the hydrostatic actuators (1, 2) up to the pressure which is needed for actuating the allocated processing machines, like forging presses or extrusion machines, and which can be delivered to those machines to actuate them via a collective pressurizing medium pipe, pressure pipe, or channel system (47) **characterised in that** the apparatus is constructed such that in use the first lower piston (1b) is in its lowermost position, whereas the second upper piston (2a) is in its uppermost position and the second lower cylinder room (2e) is in its precompression position, in which fluid, for example pure water, coming from a pipe (12) connected to the pressure pipe (47) is delivered through a second precompression valve (8) in the second lower cylinder room (2e) and the second lower piston (2b) delivers high pressure by starting its movement, and when in the first actuator (1) after starting its movement the first lower cylinder room (1 e) is filled with water through the first inlet check valve (5) and the second actuator (2) delivers fluid under high pressure into the pressure pipe (47) by movement of the second lower piston (2b) in its down position through the second outlet check valve (4), and when the first inlet check valve (5) of the first actuator (1) is closed from the second lower cylinder room (2e) fluid under high pressure is delivered into the pressure pipe (47) through the second outlet check valve (4) and when the second lower piston (2b) is in its down position the first lower cylinder room (1e) is in its precompression position, in which fluid coming from a pipe (11) connected to the pressure pipe (47) is delivered through the first precompression valve (7) in the first lower cylinder room (1e), and when the first lower cylinder room (1 e) delivers fluid under high pressure via the first outlet check valve (3) into the pressure pipe (47) and the second lower piston (2b) in the second lower cylinder room (2e) is moving by prefilling with fluid, for example pure water, and the first lower cylinder room (1e) delivers fluid, for example pure water, via the first outlet check valve (3) into the pressure pipe (47) under high pressure, whereas the first inlet check valve (5) is closed and the second lower piston (2b) of the second actuator (2) is moved completely in its uppermost position and the first lower piston (1 b) is completely in its lowermost position and the second lower cylinder room (2e) is precompressed by opening of the second precompression valve (8) and the second lower piston (2b) is ready to press the fluid under high pressure via the second outlet check valve (4) into the pressure pipe (47), and wherein the apparatus can also operate as a variable pump, pressure or volume control, when flow is not required the actuators or rams (1a, 1 b) being stationary.

2. Apparatus according to claim 1, **characterized in that** the pumps (34, 35,36) which are variable with regard to their flow rate, have, respectively, at least a check valve (29) through which the fluid pressurizing medium is conveyed to an allocated distribution valve or distribution valves (21, 22, 23, 24).

3. Apparatus according to claim 1 or 2, **characterized in that** the hydrostatic actuators (1, 2) are designed as pressure intensifiers and that the fluid is delivered to the pressure side of the hydrostatic actuators (1, 2) from a common fluid source (18) via the first and second inlet check valves (5 or 6) preferably via a filter element (14).

4. Apparatus according to claim 1 or one of claims 2 or 3, characterize in that the hydrostatic actuators (1, 2) deliver the fluid via the first and second outlet check valves (3 or 4) and preferably via a filter element into the pressurizing media pipe or channel system (47).

5. Apparatus according to claim 1 or one of claims 2 to 4, **characterized in that** the fluid which is delivered to the first and second lower cylinder rooms (1e or 2e) combinable to the pressure pipe or channel system (47), which is connectable to the processing machine, comes from a motor-driven, pump (16), from a common fluid or liquid source (18).

6. Apparatus according to claim 1 or one of claims 2 to 5, **characterized in that** each hydrostatic actuator (1, 2) comprises upper and lower cylinder rooms (1e, 1f, or 2e, 2f) which are arranged to each other in a co-axial way, in the form of the first upper and lower cylinder rooms (1f, 1e) and the second upper and lower cylinder rooms (2f, 2e), respectively wherein each upper cylinder room (1f or 2f), which is needed for the actuation is connected with the pressurized medium, which is served by the variable pumps (34, 35, 36), through a further pressurizing media pipe or channel (9, 10), wherein each lower cylinder room (1e or 2e), which is needed for the pressure delivery is connected to the pressurizing medium pipe or the channel system (47), which is connectable to the actuated processing machine.

7. Apparatus according to claim 6, **characterized in that** in the cylinder rooms (1e, 1f, or 2e, 2f) which are arranged in a co-axial way towards each other within the hydrostatic actuators (1, 2), the first and second upper and lower pistons (1a, 1 b or 2a, 2b) are arranged with equal or different pressure active piston areas which can be moved (X - Y) longitudinally and back and forth alternately.

8. Apparatus according to claim 6, **characterized in that** the pressure active piston area is substantially different at the pressure side (1b or 2b) of the pressure actuator (1, 2) which is allocated to the processing machine, for example 10 % to 45 %, as opposed to the opposite piston area of the piston (1a or 2a) which is charged by the variable pumps (34, 35, 36), witch fluid pressurizing medium.

9. Apparatus according to one of the previous claims 1-8, **characterized in that** the pressure actuators (1, 2) are arranged with their longitudinal axis parallel to each other and in vertical planes.

10. Apparatus according to one of the previous claims 1-9, **characterized in that** each ram stroke is between 0.5 meters and three meters, preferably one meter.

11. Apparatus according to one of the previous claims 1-10, **characterized in that** the full cycle time is between four to twenty seconds, preferably eight seconds, with between two to ten seconds, preferably four seconds to pump, between one to nine seconds, preferably three seconds to return, 0.5 seconds to close the inlet check valve and 0.5 seconds to precompress the fluid.

12. Apparatus according to one of the previous claims 1-11, **characterized in that** the speed of the first and second upper and lower pistons (1 a, 1b or 2a, 2b) during their pumping and returning stroke is constant, except for the short acceleration and deceleration period and has values respectively between 100 mm/sec to 500 mm/sec, preferably 250 mm/sec during the pumping stroke and between 130 mm/sec to 700 mm/sec, preferably 330 mm/sec during the returning stroke.

13. Apparatus according to one of the previous claims 1-12, **characterized in that** the actuators (1, 2) create between 4 cycles to 12 cycles per minute and preferably 7.5 cycles per minute and each outlet and inlet check valve operates between 4 times to 12 times per minute, preferably 7.5 times per minute.

## Patentansprüche

1. Vorrichtung zum Betätigen von Verarbeitungsmaschinen, wie Pressen, Schmiedepressen, Strangpressen, Schmiedehämmer, Extrusionsmaschinen, Stahlbearbeitungsmaschinen oder andere Umformmaschinen für Metall, mittels fluider Druckmedien, wobei die Vorrichtung eine gerade Anzahl von Aktoren, vorzugsweise ersten und zweiten Aktoren (1, 2), und ferner erste und zweite Einlassrückschlagventile (5, 6), erste und zweite Auslassrückschlagventile (3, 4), erste und zweite Vorverdichtungsventile (7, 8) und ein oder mehrere Pumpenaggregate (34, 35, 36) aufweist, die im Hinblick auf ihre Durchflussmenge regelbar sind und die gemeinsam oder unabhängig voneinander derart konstruiert sind, dass ihre Durchflussmenge unendlich regelbar oder einstellbar ist, und die den ersten und einen zweiten abwechselnd angetriebenen hydrostatischen Aktor (1, 2) über eines oder mehrere Verteilventile (21, 22, 23, 24) mittels eines flüssigen Druckmediums, wie beispielsweise einem Hydrauliköl, oder mit einer Emulsion betätigt wobei der erste Aktor erste obere und untere Kolben (1 a, 1b) und erste obere und untere Zylinderräume (1f, 1e) aufweist und der zweite Aktor zweite obere und untere Kolben (2a, 2b) und zweite obere und untere Zylinderräume (2f, 2e) aufweist, wobei ein unterschiedliches Druckmedium, wie beispielsweise Wasser, durch ein getrenntes Rohrsystem den hydrostatischen Aktoren (1, 2) zugeführt werden kann und wobei das unterschiedliche Druckmedium durch die hydrostatischen Aktoren (1, 2) bis zu dem Druck unter Druck gesetzt wird, der erforderlich ist, um die zugeteilten Verarbeitungsmaschinen, wie Schmiedepressen oder Extrusionsmaschinen, zu betätigen, und das an diese Maschinen geliefert werden kann, um sie über ein gemeinsames Druckmedium-Rohr, Druckrohr oder Kanalsystem (47) zu betätigen, **dadurch gekennzeichnet, dass** die Vorrichtung derart konstruiert ist, dass bei der Verwendung der erste untere Kolben (1 b) sich in seiner untersten Stellung befindet, während der zweite obere Kolben (2a) sich in seiner obersten Stellung befindet und der zweite untere Zylinderraum (2e) sich in seiner Vorverdichtungsstellung befindet, in der Fluid, zum Beispiel Reinwasser, das von einem Rohr (12) kommt, das mit dem Druckrohr (47) verbunden ist, durch ein zweites Vorverdichtungsventil (8) in den zweiten unteren Zylinderraum (2e) geliefert wird und der zweite untere Kolben (2b) durch den Beginn seiner Bewegung hohen Druck liefert, und, wenn im ersten Aktor (1) nach dem Beginn seiner Bewegung der erste untere Zylinderraum (1e) mit Wasser durch das erste Einlassrückschlagventil (5) gefüllt wird und der zweite Aktor (2) Fluid unter Druck in das Druckrohr (47) durch Bewegung des zweiten unteren Kolbens (2b) in seine untere Position durch das zweite Auslassrückschlagventil (4) liefert, und, wenn das erste Einlassrückschlagventil (5) des ersten Aktors (1) geschlossen wird, Fluid unter hohem Druck von dem zweiten unteren Zylinderraum (2e) in das Druckrohr (47) durch das zweite Auslassrückschlagventil (4) geliefert wird, und, wenn der zweite untere Kolben (2b) sich in seiner unteren Stellung befindet, der erste untere Zylinderraum (1e) sich in seiner Vorverdichtungsposition befindet, in der Fluid, das von einem Rohr (11) kommt, das mit dem Druckrohr (47) verbunden ist, durch das erste Vorverdichtungsventil (7) im ersten unteren Zylinderraum (1e) geliefert wird, und, wenn der erste untere Zylinderraum (1e) Fluid unter hohem Druck über das erste Auslassrückschlagventil (3) in das Druckrohr (47) liefert und der zweite untere Kolben (2b) in dem zweiten unteren Zylinderraum (2e) sich durch Vorfüllung mit Fluid, zum Beispiel Reinwasser, bewegt, und der erste untere Zylinderraum (1e) Fluid, zum Beispiel Reinwasser, über das erste Auslassrückschlagventil (3) in das Druckrohr (47) unter hohem Druck liefert, während das erste Einlassrückschlagventil (5) geschlossen wird und der zweite untere Kolben (2b) des zweiten Aktors (2) vollständig in seine oberste Stellung bewegt wird und der erste untere Kolben (1 b) sich vollständig in seiner untersten Stellung befindet und der zweite untere Zylinderraum (2e) durch Öffnen des zweiten Vorverdichtungsventils (8) vorverdichtet wird und der zweite untere Kolben (2b) bereit ist, um das Fluid unter hohem Druck über das zweite Auslassrückschlagventil (4) in das Druckrohr (47) zu drücken, und wobei die Vorrichtung auch als eine Regelpumpen-, Druck- oder Volumensteuerung arbeiten kann, wenn kein Strömen erforderlich ist, die Aktoren oder Stößel (1 a, 1 b) ortsfest sind.

2. Vorrichtung nach Anspruch 1, **dadurch gekennzeichnet, dass** die Pumpen (34, 35, 36), die im Hinblick auf ihre Durchflussmenge regelbar sind, mindestens ein Rückschlagventil (29) aufweisen, durch welches das fluide Druckmedium zu einem zugeteilten Verteilventil beziehungsweise Verteilventilen (21, 22, 23, 24) befördert wird

3. Vorrichtung nach Anspruch 1 oder 2, **dadurch gekennzeichnet, dass** die hydrostatischen Aktoren (1, 2) als Druckübersetzer konstruiert sind und dass das Fluid an die Druckseite der hydrostatischen Aktoren (1, 2) von einer gemeinsamen Fluidquelle (18) über die ersten und zweiten Einlassrückschlagventile (5 oder 6), vorzugsweise über ein Filterelement (14), geliefert wird.

4. Vorrichtung nach Anspruch 1 oder irgendeinem von Anspruch 2 oder 3, **dadurch gekennzeichnet, dass** die hydrostatischen Aktoren (1, 2) das Fluid über die ersten und zweiten Auslassrückschlagventile (3 oder 4) und vorzugsweise über ein Filterelement in das Druckmediumrohr oder Kanalsystem (47) liefern.

5. Vorrichtung nach Anspruch 1 oder irgendeinem der Ansprüche 2 bis 4, **dadurch gekennzeichnet, dass** das Fluid, das durch die ersten und zweiten unteren Zylinderräume (1e oder 2e) geliefert wird, die mit dem Druckrohr oder Kanalsystem (47) kombinierbar sind, das mit der Verarbeitungsmaschine verbunden werden kann, von einem Pumpenaggregat (16), von einer gemeinsamen Fluid- oder Flüssigkeitsquelle (18) kommt.

6. Vorrichtung nach Anspruch 1 oder irgendeinem der Ansprüche 2 bis 5, **dadurch gekennzeichnet, dass** jeder hydrostatische Aktor (1, 2) obere und untere Zylinderräume (1e, 1f oder 2e, 2f), die koaxial zueinander angeordnet sind, in der Form der ersten oberen und unteren Zylinderräume (1f, 1e), beziehungsweise der zweiten oberen und unteren Zylinderräume (2f, 2e) umfasst, wobei jeder obere Zylinderraum (1f oder 2f), der für die Betätigung erforderlich ist, mit dem Druckmedium verbunden ist, das durch die Regelpumpen (34, 35, 36), durch ein/en weiteres/weiteren Druckmedium-Rohr oder -kanal (9, 10) geliefert wird, wobei jeder untere Zylinderraum (1e oder 2e), der zur Drucklieferung erforderlich ist, mit dem Druckmedium-Rohr oder dem Kanalsystem (47) verbunden ist, das mit der betätigten Verarbeitungsmaschine verbunden werden kann.

7. Vorrichtung nach Anspruch 6, **dadurch gekennzeichnet, dass** in den Zylinderräumen (1e, 1f oder 2e, 2f), die koaxial zueinander innerhalb der hydrostatischen Aktoren (1, 2) angeordnet sind, die ersten und zweiten oberen und unteren Kolben (1a, 1b oder 2a, 2b) mit gleichen oder unterschiedlichen druckwirksamen Kolbenflächen angeordnet sind, die in Längsrichtung und abwechselnd vorwärts und rückwärts bewegt (X - Y) werden können

8. Vorrichtung nach Anspruch 6, **dadurch gekennzeichnet, dass** die druckwirksame Kolbenfläche auf der Druckseite (1b oder 2b) des Druckaktors (1, 2), der der Verarbeitungsmaschine zugeteilt ist, sich im Wesentlichen, zum Beispiel um 10 % bis 45 %, gegenüber der entgegengesetzten Kolbenfläche des Kolbens (1a oder 2a) unterscheidet, der durch die Regelpumpen (34, 35, 36) mit fluidem Druckmedium beschickt wird

9. Vorrichtung nach irgendeinem der vorhergehenden Ansprüche 1 bis 8, **dadurch gekennzeichnet, dass** die Druckaktoren (1, 2) mit ihrer Längsachse parallel zueinander und in vertikalen Ebenen angeordnet sind

10. Vorrichtung nach irgendeinem der vorhergehenden Ansprüche 1 bis 9, **dadurch gekennzeichnet, dass** jeder Stößelhub zwischen 0,5 Metern und drei Metern, vorzugsweise ein Meter, beträgt.

11. Vorrichtung nach irgendeinem der vorhergehenden Ansprüche 1 bis 10, **dadurch gekennzeichnet, dass** die vollständige Zykluszeit zwischen vier bis zwanzig Sekunden, vorzugsweise acht Sekunden, mit zwischen zwei bis zehn Sekunden, vorzugsweise vier Sekunden, zum Pumpen, zwischen einer bis neun Sekunden, vorzugsweise drei Sekunden, zur Rückkehr, 0,5 Sekunden zum Schließen des Einlassrückschlagventils und 0.5 Sekunden zum Vorverdichten des Fluids beträgt

12. Vorrichtung nach irgendeinem der vorhergehenden Ansprüche 1 bis 11, **dadurch gekennzeichnet, dass** die Geschwindigkeit der ersten und zweiten oberen und unteren Kolben (1a, 1b oder 2a, 2b) während ihres Pump- und Rückhubs bis auf die kurze Beschleunigungs- und Verlangsamungsperiode konstant ist, und Werte zwischen 100 mm/Sek. bis 500 mm/Sek., vorzugsweise 250 mm/Sek., während des Pumphubs, beziehungsweise zwischen 130 mm/Sek. bis 700 mm/Sek., vorzugsweise 330 mm/Sek., während des Rückhubs beträgt

13. Vorrichtung nach irgendeinem der vorhergehenden Ansprüche 1 bis 12, **dadurch gekennzeichnet, dass** die Aktoren (1, 2) zwischen 4' Zyklen und 12 Zyklen pro Minute und vorzugsweise 7,5 Zyklen pro Minute erzeugen und jedes Auslass- und Einlassrückschlagventil zwischen 4 bis 12 Mal pro Minute, vorzugsweise 7,5 Mal pro Minute, arbeitet

## Revendications

1. Appareillage pour actionner des machines de transformation telles que des presses, presses à forger, presses à extruder, marteaux de forge, machines à extruder, machines de transformation de l'acier ou autres machines à mouler les métaux, à l'aide de fluides liquides sous pression, l'appareillage présentant un nombre pair d'actionneurs, de préférence les premier et second actionneurs (1, 2), ensuite les première et seconde vannes d'admission (5, 6) à clapet antiretour, les première et seconde vannes de sortie (3, 4) à clapet antiretour, les première et seconde vannes de précompression (7, 8) et une ou plusieurs pompes (34, 35, 36) entraînées par moteur et qui présentent un débit variable et qui, collectivement ou séparément les unes des autres sont conçues de manière que leur débit soit variable ou ajustable à l'infini et qu'il actionne le premier et un second actuateurs (1, 2) hydrostatiques entraînés en alternance via une ou plusieurs vannes de distribution (21, 22, 23, 24) au moyen d'un fluide liquide sous pression tel que de l'huile hydraulique ou une émulsion, le premier actuateur présentant les premiers pistons supérieur et inférieur (1a et 1b) et les premières chambres de cylindre supérieure et inférieure (1f, 1e) et le second actionneur présentant les seconds pistons supérieur et inférieur (2a, 2b) et les secondes chambres de cylindre supérieure et inférieure (2f, 2e) dans lesquelles il est possible d'injecter un fluide de pressurisation différent tel que de l'eau, via un système de conduite séparé en direction des actuateurs hydrostatiques (1, 2) et sachant que le fluide de pressurisation différent est mis sous pression par les actionneurs hydrostatiques (1, 2) jusqu'à la pression requise pour actionner les machines de transformation attribuées telles que des presses à forger ou des machines à extruder, et qui peut être délivré à ces machines via une conduite collective de fluide de pressurisation, une conduite sous pression ou un système de conduit (47) pour les actionner, **caractérisé en ce que** l'appareilage est construit de telle manière que pendant l'utilisation le premier piston inférieur (1 b) se trouve sur sa position la plus basse, tandis que le second piston supérieur (2a) se trouve sur sa position la plus haute, et la seconde chambre de cylindre inférieure (2e) se trouve sur sa position de précompression dans laquelle le fluide, de l'eau pure par exemple, venant d'une conduite (12) raccordée à la conduite sous pression (47), est débité via une seconde vanne de précompression (8) dans la seconde chambre de cyclindre inférieure (2e) et le second piston inférieur (2b) développe une pression élevée en démarrant son mouvement, et lorsque dans le premier actionneur (1), après démarrage de son mouvement, la première chambre de cylindre inférieure (1e) est remplie d'eau via la première vanne d'admission (5) à clapet antiretour et que le second actionneur (2) débite du fluide sous haute pression dans la conduite sous pression (47) par déplacement du second piston inférieur (2b) jusque dans sa position inférieure via la seconde vanne de sortie (4) à clapet antiretour, et lorsque la première vanne d'admission (5) à clapet antiretour du premier actionneur (1) est fermée, du fluide sous haute pression est débité de la seconde chambre de cylindre inférieure (2e) dans la conduite sous pression (47) via la seconde vanne de sortie (4) à clapet antiretour, et lorsque le second piston inférieur (2b) se trouve en position inférieure, la première chambre de cylindre inférieure (1e) se trouve sur sa position de précompression dans laquelle le fluide provenant d'une conduite (11) raccordée à la conduite sous pression (47) afflue via la première vanne de précompression (7) dans la première chambre de cylindre inférieure (1e), et lorsque la première chambre de cylindre inférieure (1e) débite le fluide sous haute pression via la première vanne de sortie (3) à clapet antiretour dans la conduite (47) sous pression, et que le second piston inférieur (2b) dans la seconde chambre de cylindre inférieure (2e) se déplace sous l'effet du préremplissage avec le fluide, de l'eau pure par exemple; et que la première chambre de cylindre inférieure (1e) débite du fluide, de l'eau pure par exemple, via la première vanne de sortie (3) à clapet antiretour, sous haute pression dans la conduite sous pression (47), tandis que la première vanne d'entrée (5) à clapet antiretour est fermée et que le second piston inférieur (2b) du second actionneur (2) est déplacé entièrement jusque sur sa position la plus élevée et que le premier piston inférieur (1 b) se trouve complètement sur sa position la plus basse et la seconde chambre de cylindre inférieure (2e) est précomprimée par l'ouverture de la seconde vanne de précompression (8) et le second piston inférieur (2b) est prêt pour forcer le fluide sous haute pression à traverser la seconde vanne de sorte (4) à clapet antiretour pour qu'il pénètre dans la conduite sous pression (47), et sachant que l'appareilage peut aussi fonctionner comme commande de pompe à débit variable, de pression ou de volume lorsque le débit n'est pas nécessaire parce que les actionneurs ou poussoirs (1 a, 1 b) sont immobiles.

2. Appareillage selon la revendication 1, **caractérisé en ce que** les pompes (34, 35, 36), lesquelles sont variables quant à leur débit de refoulement, présentent chacune au moins une vanne (29) à clapet antiretour via laquelle le fluide de pressurisation liquide est refoulé vers une vanne de distribution attribuée ou plusieurs vannes de distribution (21, 22, 23, 24).

3. Appareillage selon la revendication 1 ou 2, **caractérisé en ce que** les actionneurs hydrostatiques (1, 2) sont conçus comme des amplificateurs de pression et que le fluide est débité sur le côté sous pression des actionneurs hydrostatiques (1, 2) depuis une source (18) de fluide commune, via les première et seconde vannes d'admission (5 ou 6) à clapet antiretour, de préférence via un élément filtrant (14).

4. Appareillage selon la revendication 1 ou l'une des revendications 2 ou 3, **caractérisé en ce que** les actionneurs hydrostatiques (1, 2) débitent le fluide via les première et seconde vannes de sortie (3 ou 4) à clapet antiretour et de préférence via un élément filtre, en direction de la conduite à fluide sous pression ou du système de canaux (47).

5. Appareillage selon la revendication 1 ou l'une des revendications 2 à 4, **caractérisé en ce que** le fluide qui est débité aux première et seconde chambres de cylindre inférieures (1e ou 2e), combinables avec la conduite sous pression ou le système de canaux (47), qu'il est possible de relier à la machine de transformation, provient d'une pompe (16) entraînée par moteur depuis une source commune (18) de fluide ou de liquide.

6. Appareillage selon la revendication 1 ou l'une des revendications 2 à 5, **caractérisé en ce que** chaque actionneur hydrostatique (1, 2) comprend des chambres de cylindre supérieure et inférieure (1e, 1f ou 2e, 2f) réciproquement agencées de manière coaxiale, sous la forme des premières chambres de cylindre supérieure et inférieure (1f, 1e), et des secondes chambres de cylindre supérieure et inférieure (2f, 2e), sachant respectivement que chaque chambre de cylindre supérieure (1f ou 2f) qui est nécessaire pour l'actionnement est connectée au fluide sous pression débité par les pompes variables (34, 35, 36) via une autre conduite ou un autre canal (9, 10) de fluide sous pression, sachant que chaque chambre de cylindre inférieure (1e ou 2e) nécessaire pour débiter la pression est reliée à la conduite de fluide sous pression ou au système de canaux (47) qui est connectable à la machine de transformation actionnée.

7. Appareillage selon la revendication 6, **caractérisé en ce que** les chambres (1e, 1f ou 2e, 2f) de cylindres qui sont agencées réciproquement coaxiales à l'intérieur des actionneurs hydrostatiques (1, 2), les premier et second pistons inférieur et supérieur (1a, 1b ou 2a, 2b) sont agencés avec des zones de piston actives sous pressions égales ou différentes pouvant être déplacées en alternance longitudinalement (X - Y) et en avant / arrière.

8. Appareillage selon la revendication 6, **caractérisé en ce que** la zone de piston active sous pression est substantiellement différentes sur le côté sous pression (1b ou 2b) de l'actionneur sous pression (1, 2) qui est affecté à la machine de transformation, par exemple compris entre 10 et 45 %, comparé à la zone opposée du piston (1a ou 2a) qui est mise sous pression par les pompes variables (34, 35, 36) avec le fluide sous pression..

9. Appareillage selon l'une des revendications 1 à 8, **caractérisé en ce que** les actionneurs sous pression (1, 2) sont agencés avec leur axe longitudinal parallèle l'un à l'autre et selon des plans verticaux.

10. Appareillage selon l'une des revendications 1 à 9, **caractérisé en ce que** la course de chaque poussoir est comprise entre 0,5 et trois mètres, et est de préference d'un mètre.

11. Appareillage selon l'une des revendications 1 à 10, **caractérisé en ce que** la durée complète du cycle est comprise entre quatre et vingt secondes, huit secondes de préférence, avec entre deux et dix secondes, de préférence quatre, pour pomper, entre une et neuf secondes, de préférence trois, pour revenir, 0,5 seconde pour refermer la vanne d'admission à clapet antiretour et 0,5 secondes pour précomprimer le fluide.

12. Appareillage selon l'une des revendications 1 à 11, **caractérisé en ce que** la vitesse des premier et second pistons supérieur et inférieur (1a, 1 b ou 2a, 2b) est constante pendant leur course de refoulement et de retour, excepté pendant la brève période d'accélération et de décélération, et qu'elle présente pendant la course de refoulement des valeurs comprises respectivement entre 100 et 500 mm/sec, 250 mm/sec de préférence et, pendant la course de retour, comprises entre 130 et 700 mm/sec, 330 mm/sec de préférence.

13. Appareillage selon l'une des revendications 1 à 12, **caractérisé en ce que** les actionneurs (1, 2) génèrent entre 4 et 12 cycles par minute et de préférence 7,5 cycles par minute, et que chacune des vannes de sortie et d'entrée à clapet antiretour commute entre 4 et 12 fois par minute, de préférence 7,5 fois.
